# EUROPÄISCHE PATENTSCHRIFT

(11) **EP 3 056 848 B1**
(45) Veröffentlichungstag und Bekanntmachung des Hinweises auf die Patenterteilung: **31.01.2018**
(21) Anmeldenummer: 15154761.9
(22) Anmeldetag: 11.02.2015
(51) Int. Cl.: F28D 20/02, B01D 9/00, A61F 7/02, F28F 1/32

(54) **Latentwärmespeicher mit einer Vorrichtung zur Auslösung der Kristallisation**
Latent heat reservoir with a device for starting the crystallisation
Accumulateur de chaleur latente comprenant un dispositif pour déchaîner la cristallisation

(43) Veröffentlichungstag der Anmeldung: 17.08.2016
(73) Patentinhaber: H.M. Heizkörper GmbH & Co. KG, 37351 Dingelstädt (DE)
(72) Erfinder:
(74) Vertreter: Oppermann, Frank

(56) Entgegenhaltungen:
- DE-A1- 3 044 202
- DE-A1- 10 303 498
- DE-A1-102013 220 281
- JP-A- 2007 285 549

## Beschreibung

Die Erfindung betrifft einen Latentwärmespeicher mit einem Speicherbehälter zur Aufnahme eines Phasenwechselmaterials und einer Vorrichtung zur Auslösung einer Kristallisation in dem Phasenwechselmaterial.

In solarthermischen Anlagen finden zum Speichern von Solarenergie Latentwärmespeicher Verwendung, die über einen Speicherbehälter zur Aufnahme eines Wärmespeichermediums verfügen. In dem Speicherbehälter ist ein Wärmetauscher angeordnet, der mit einem Vorlauf zum Zuführen eines Wärmeträgermediums und einem Rücklauf zum Abführen des Wärmeträgermediums verbunden ist.

Die bekannten Latentwärmespeicher können durch Zufuhr von Wärme aufgeladen und durch Abfuhr der gespeicherten Wärme entladen werden. Die bekannten Wärmespeichersysteme verfügen zum Speichern der Wärmeenergie über mehrere Latentwärmespeicher.

Als Wärmespeichermedium kann ein Phasenwechselmaterial (PCM) Verwendung finden, das zum Speichern der solaren Wärme die Enthalpie reversibler thermodynamischer Zustandsänderungen ausnutzt. Ein bekanntes Phasenwechselmaterial ist beispielsweise Natriumacetat-Trihydrat, das eine hohe Schmelzenthalpie und einen relativ geringen Preis hat. Beim Laden des Latentwärmespeichers geht das Phasenwechselmaterial von einem festen Aggregatzustand in einen flüssigen Aggregatzustand über. Natriumacetat-Trihydrat beispielsweise wird bei einer Schmelztemperatur von 58 °C verflüssigt. Beim Abkühlen bleibt das Salzhydrat als unterkühlte Schmelze in einem metastabilen Zustand flüssig. Wenn eine Kristallisation in der unterkühlten Schmelze ausgelöst wird, erwärmt sich das Salzhydrat auf eine Temperatur von 58 °C, wobei die latente Wärme wieder freigegeben wird.

Ein Wärmespeichersystem für eine solartechnische Anlage ist aus der EP 2 273 226 A1 bekannt. Das Wärmespeichersystem umfasst eine Mehrzahl von Wärmespeicher-Behältern, die nacheinander aufgeladen oder entladen werden können. Die einzelnen Wärmespeicher-Behälter sind über ein Leitungssystem miteinander verbunden. Zur Steuerung des Zu- bzw. Abflusses des Wärmeträgermediums sind in den Zuführ- und Abführleitungen Ventile angeordnet, die von einer Steuereinheit angesteuert werden. Die Steuerung erlaubt eine Auf- bzw. Entladung der einzelnen Behälter.
Bei den bekannten Wärmespeichersystemen besteht die Gefahr einer unbeabsichtigten Auslösung der Kristallisation in dem Phasenwechselmaterial, so dass der Latentwärmespeicher zu einem Zeitpunkt entladen wird, zu dem die Wärme nicht gebraucht wird. Für einen störungsfreien Betrieb eines Wärmespeichersystems ist daher die sichere Auslösung der Kristallisation zu einem bestimmten Zeitpunkt von entscheidender Bedeutung.
Die DE 10 2010 046 243 A1 beschreibt eine Vorrichtung zur Auslösung der Kristallisation für einen Latentwärmespeicher, die über ein mechanisch verformbares Auslöseelement und einen Aktivierungsmechanismus verfügt. Das Auslösungselement ist als ein Plättchen ausgebildet, das nach Betätigung des Aktivierungsmechanismus schlagartig von einer Form in eine andere Form übergeht. Der Aktivierungsmechanismus weist eine elektrische, elektromagnetische, pneumatische oder piezoelektrische Antriebseinheit auf.

Die DE 30 44 202 A1 beschreibt einen Latentwärmespeicher mit einer Vorrichtung zur Auslösung der Kristallisation gemäß dem Oberbegriff des Anspruchs 1.

Der Erfindung liegt die Aufgabe zugrunde, einen Latentwärmespeicher für eine solarthermische Anlage zu schaffen, der über eine Vorrichtung zur Auslösung der Kristallisation in dem Phasenwechselmaterial verfügt, die den Kristallisationsprozess sicher in Gang setzt und sich in großen Stückzahlen bei verhältnismäßig geringen Produktionskosten herstellen lässt.
Die Lösung dieser Aufgabe erfolgt erfindungsgemäß mit den Merkmalen des Patentanspruchs 1. Die Gegenstände der Unteransprüche betreffen vorteilhafte Ausführungsformen der Erfindung.
Die Vorrichtung zur Auslösung der Kristallisation des erfindungsgemäßen Latentwärmespeichers weist ein erstes Peltier-Element und ein zweites Peltier-Element auf, die unter Bildung eines Spaltes zur Aufnahme des Phasenwechselmaterials im Abstand zueinander angeordnet sind. Mit den beiden Peltier-Elementen kann bei einer kompakten Bauform der Vorrichtung zur Auslösung der Kristallisation eine Abkühlung des Phasenwechselmaterials auf eine Temperatur erreicht werden, die so niedrig ist, dass eine Kristallisation ausgelöst wird. Der Spalt zwischen den Peltier-Elementen bildet ein Kompartiment, in den das Phasenwechselmaterial fließen kann. In diesem Kompartiment kann das Phasenwechselmaterial in verhältnismäßig kurzer Zeit auf die erforderliche Temperatur abgekühlt werden. Die beidseitige Anordnung der Peltier-Elemente schafft einen besonders guten Wärmeübergang.

Wenn als Phasenwechselmaterial Natriumacetat-Trihydrat verwendet wird, sollte die Temperatur, auf die das Phasenwechselmaterial abgekühlt wird, zwischen -10°C und - 30°C, vorzugsweise -20°C bis -30°C liegen.

In der Praxis ist die Abkühlung des Phasenwechselmaterials in dem Spalt zwischen dem ersten und zweiten Peltier-Element für eine sichere Auslösung der Kristallisation allein nicht ausreichend. Es hat sich in Versuchen gezeigt, dass eine sichere Auslösung der Kristallisation dann gewährleistet ist, wenn in dem Spalt zwischen dem ersten und zweiten Peltier-Element unter Bildung von Kanälen in dem Spalt, durch die das Phasenwechselmaterial in den Spalt fließen kann, mindestens ein metallischer Körper angeordnet ist, der im thermischen Kontakt mit dem ersten und zweiten Peltier-Element ist. Es hat sich gezeigt, dass für die spontane Kristallisation bei der Abkühlung des Phasenwechselmaterials die Spaltbildung mit den Kanälen in Verbindung mit der Anwesenheit des Werkstoffs Metall entscheidend ist.

Die Versuche haben gezeigt, dass grundsätzlich sämtliche metallischen Körper verwendet werden können. Allerdings sind nur solche Metalle geeignet, die von dem Phasenwechselmaterial nicht chemisch angegriffen werden. Als Werkstoff für den mindestens einen Metallkörper hat sich insbesondere Edelstahl als besonders vorteilhaft erwiesen, der bei ausreichender chemischer Resistenz kostengünstig ist.

Die Dicke des mindestens einen metallischen Körpers entspricht vorzugsweise der Höhe des Kompartiments, so dass der mindestens eine metallische Körper die Anlageflächen der beiden Peltier-Elemente kontaktiert.

Bei der Ausführungsform, bei der in dem Spalt mehrere metallische Körper angeordnet sind, ist die Form der metallischen Körper nicht entscheidend, um in dem Kompartiment Kanäle auszubilden. Die metallischen Körper können beispielsweise Körper mit einem runden oder eckigen Querschnitt sein, beispielsweise einen kreisrunden oder rechteckförmigen Querschnitt haben. Als metallische Körper können beispielsweise auch Metallkugeln verwendet werden, die im Abstand zueinander angeordnet sind. Die metallischen Körper können sich über die gesamte Länge bzw. Breite oder nur einen Teil der Länge bzw. Breite des Kompartiments erstrecken.

Eine bevorzugte Ausführungsform sieht vor, dass in dem Spalt zwischen den Peltier-Elementen mehrere im Abstand zueinander angeordnet Metalldrähte oder Metallfäden angeordnet sind. In Versuchen hat sich gezeigt, dass die Anordnung der Metalldrähte in dem Spalt bei einer Abkühlung des Phasenwechselmaterials zu einer spontane Auslösung der Kristallisation führt. Die Metalldrähte- oder -fäden sind vorzugsweise chemisch resistente Edelstahldrähte oder -fäden. In diesem Zusammenhang werden unter Drähten oder Fäden nicht nur langestrecke Körper mit einem kreisförmigen, sondern auch nichtkreisförmigen Querschnitt verstanden, beispielsweise stabförmige metallische Körper mit einem beispielsweise rechteckförmigen Querschnitt.

Eine besonders bevorzugte Ausführungsform sieht eine parallele Anordnung der Metalldrähte- oder -fäden in dem Spalt vor, so dass zwischen den Drähten oder Fäden längslaufende Kanäle ausgebildet werden, durch die Phasenwechselmaterial leicht in den Spalt fließen kann.

Die Spaltbreite sollte so bemessen sein, dass sich in dem Spalt keine Luftblasen ansammeln können. Als geeignete Spaltbreite hat sich ein Abstand zwischen dem ersten und zweiten Peltier-Element erwiesen, der zwischen 0,2 bis 0,6 mm, vorzugsweise zwischen 0,3 und 0,5 mm, insbesondere 0,4 mm, liegt.

Der mindestens eine metallische Körper ist mit mindestens einem der Peltier-Elemente vorzugsweise verklebt. Zum Verkleben wird vorzugsweise ein Kleber verwendet, der eine hohe Wärmeleitkapazität hat. Es ist aber auch möglich, dass der mindestens eine metallische Körper zwischen den beiden Peltier-Elementen klemmend fixiert ist.

Bei der alternativen Ausführungsform, bei der in dem Spalt ein metallischer Körper angeordnet ist, kann der metallische Körper Bohrungen und/oder Rillen aufweisen, die die Kanäle zwischen dem ersten und zweiten Peltier-Element ausbilden. Der metallische Körper kann aber auch derart geformt sein, dass zwischen dem ersten und zweiten Peltier-Element Kanäle ausgebildet werden. Eine bevorzugte Ausführungsform sieht einen mäanderförmigen oder wellenförmigen Metallkörper zwischen den Peltier-Elementen vor.

Eine besonders bevorzugte Ausführungsform sieht vor, dass die einander abgewandten Seiten des ersten und zweiten Peltier-Elements jeweils mit einem Kühlkörper im thermischen Kontakt sind. Dadurch kann eine ausreichend hohe Wärmemenge abgeführt werden, so dass sich mit den Peltier-Elementen eine Temperaturdifferenz erreichen lässt, die für die Auslösung der Kristallisation ausreichend ist.

Bei einer weiteren besonders bevorzugten Ausführungsform ist der Kühlkörper des ersten Peltier-Elements und der Kühlkörper des zweiten Peltier-Elements als eine erste und eine zweite Gehäusehälfte des Gehäuses der Vorrichtung zur Auslösung der Kristallisation ausgebildet. Die Kühlkörper sind vorzugsweise miteinander verschraubt, wobei in dem ersten und/oder zweiten Kühlkörper mindestens ein zu dem Spalt zwischen den Peltier-Elementen führender Durchbruch vorgesehen ist, durch den das Phasenwechselmaterial in die Kanäle des Spaltes strömen kann. Damit bildet die Vorrichtung zur Auslösung der Kristallisation eine Einheit, die leicht in den Speicherbehälter eingebaut werden kann. Das Gehäuse weist vorzugsweise ein Befestigungselement auf, mit dem die Vorrichtung an dem Speicherbehälter befestigt ist. Das Befestigungselement ist vorzugsweise als eine Leitungsführung ausgebildet, in der die Anschlussleitungen für das erste und zweite Peltier-Element geführt sind.

Die Vorrichtung zur Auslösung der Kristallisation ist vorzugsweise in der in der Gebrauchslage unteren Hälfte des Speicherbehälters, besonders bevorzugt im unteren Drittel des Speicherbehälters, angeordnet, in dem das Phasenwechselmaterial im Allgemeinen eine niedrigere Temperatur hat.

Nachfolgend werden verschiedene Ausführungsbeispiele der Erfindung unter Bezugnahme auf die Zeichnungen näher erläutert.

Es zeigen:
- Fig. 1: einen erfindungsgemäßen Latentwärmespeicher eines Wärmespeichersystems in teilweiser geschnittener Darstellung,
- Fig. 2: die Vorrichtung zur Auslösung der Kristallisation des erfindungsgemäßen Latentwärmespeichers in geschnittener Darstellung,
- Fig. 3: den Ausschnitt A von Fig. 2 in vergrößerter Darstellung,
- Fig. 4: eine Hälfte der Vorrichtung zur Auslösung der Kristallisation in geschnittener Darstellung,
- Fig. 5: einen Ausschnitt eines zweiten Ausführungsbeispiels der Vorrichtung zur Auslösung der Kristallisation,
- Fig.6: einen Ausschnitt eines dritten Ausführungsbeispiels der Vorrichtung zur Auslösung der Kristallisation und
- Fig. 7: einen Ausschnitt eines vierten Ausführungsbeispiels der Vorrichtung zur Auslösung der Kristallisation.

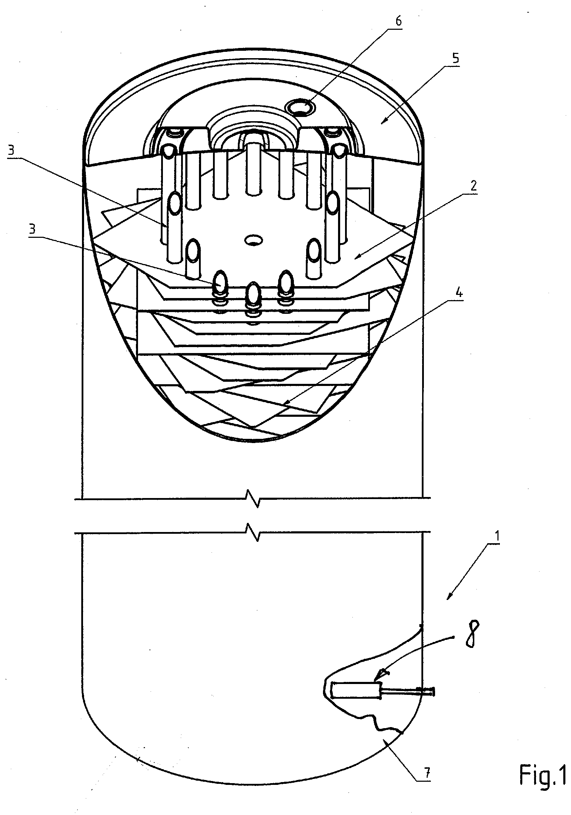

Fig. 1 zeigt ein Ausführungsbeispiel eines Latentwärmespeichers in teilweise geschnittener Darstellung. Der Latentwärmespeicher weist einen Speicherbehälter 1 auf, der mit einem nicht dargestellten Phasenwechselmaterial (PCM) befüllt ist, das einen Wärmetauscher 2 umschließt. Der Wärmetauscher 2 weist eine Mehrzahl von Rohren 3 auf, die um eine zentrale Achse umfangsmäßig verteilt angeordnet sind. Die Rohre 3 des Wärmetauschers 2 erstrecken sich durch einen Stapel 4 von Platten. Der Plattenstapel 4 dient der Vergrößerung der wirksamen Wärmeübergangsfläche. Am Deckelteil 5 des Behälters befindet sich ein Rücklauf-Anschluss 6 zum Abführen eines flüssigen Wärmeträgers und am Bodenteil 7 ein nicht dargestellter Vorlauf-Anschluss zum Zuführen des Wärmeträgers. In der Gebrauchslage liegt der Rücklauf-Anschluss 6 oben und der Vorlauf-Anschluss unten.

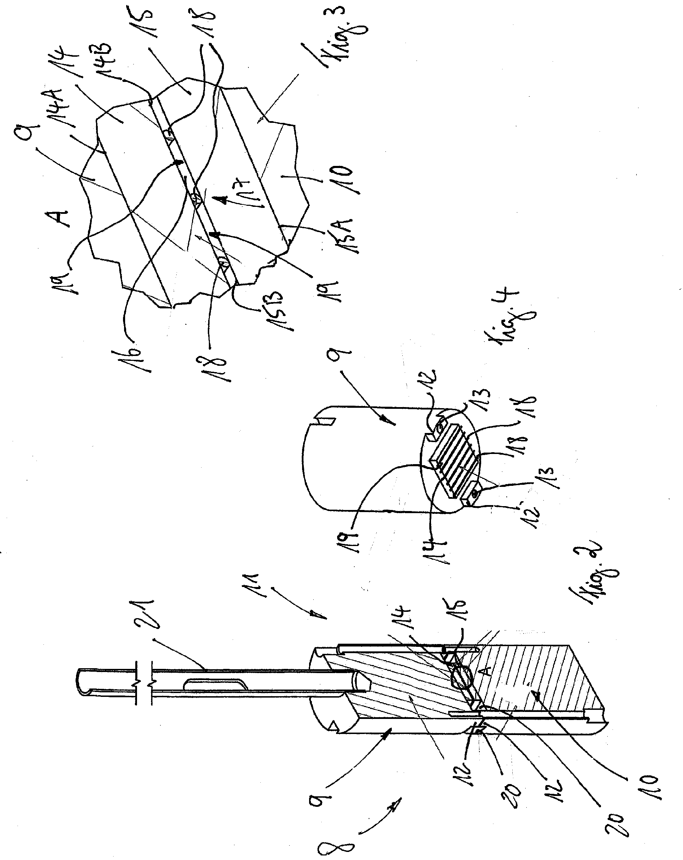

Zur Auslösung des Kristallisationsprozesses in dem Phasenwechselmaterial ist eine Vorrichtung 8 vorgesehen, die in der in der Gebrauchslage unteren Hälfte, vorzugsweise im unteren Drittel des Speicherbehälters 1, besonders bevorzugt am Boden des Speicherbehälters 1 angeordnet ist. In Fig. 1 ist die Vorrichtung 8 zur Auslösung der Kristallisation nur andeutungsweise dargestellt. Fig. 2 zeigt die Vorrichtung 8 zur Auslösung der Kristallisation in geschnittener Darstellung.

Die Vorrichtung 8 zur Auslösung der Kristallisation weist einen ersten Kühlkörper 9 und einen zweiten Kühlkörper 10 auf, die jeweils eine Hälfte des Gehäuses 11 der Vorrichtung 8 bilden. Beide Kühlkörper 9, 10 sind im Wesentlichen zylindrische Metallkörper, deren Stirnflächen einander zugewandt sind. Fig. 3 zeigt eine Hälfte der Vorrichtung 8 zur Auslösung der Kristallisation. An den einander zugewandten Stirnflächen weisen die zylindrischen Kühlkörper 9, 10 jeweils zwei einander gegenüberliegende Ansätze 12 auf. Die Kühlkörper 9, 10 sind miteinander verschraubt, wobei deren Stirnflächen im Abstand zueinander angeordnet sind. Die nicht dargestellten Schrauben sitzen in Bohrungen 13 in den Kühlkörpern 9, 10.

An der Stirnfläche des ersten Kühlkörpers 9 ist ein erstes Peltier-Element 14 und an der gegenüberliegenden Stirnfläche des zweiten der Kühlkörper 10 ist ein zweites Peltier-Element 15 angeordnet. Die plattenförmigen, insbesondere quadratischen Peltier-Elemente 14, 15 weisen an der Ober- bzw. Unterseite jeweils eine Platte aus Keramik mit einer ersten und zweiten Anlagefläche 14A, 14B bzw. 15A, 15B auf, wobei die erste Anlagefläche 14A mit dem jeweiligen Kühlkörper 9, 10 im thermischen Kontakt ist, so dass die Wärmeenergie über die Kühlkörper in das Phasenwechselmaterial abgeführt werden kann. Die zweiten Anlageflächen 14B, 15B der Peltier-Elemente 14, 15 sind im Abstand zueinander angeordnet. Der Spalt 16 zwischen den Peltier-Elementen 14, 15 hat eine Spaltbreite, die bei dem vorliegenden Ausführungsbeispiel zwischen 0,3 und 0,5 mm, insbesondere 0,4 mm, liegt.

In dem Spalt 16 zwischen den Peltier-Elementen 14, 15 sind mehrere metallische Körper 17 angeordnet, die mit den zweiten Anlageflächen 14B, 15B der Peltier-Elemente 14, 15 in thermischen Kontakt sind. Die metallischen Körper 18 sind parallel verlaufende Metalldrähte oder Metallfäden 18, vorzugsweise aus Edelstahl. Die Metalldrähte 18 oder - fäden sind vorzugsweise mit zumindest der Anlagefläche eines Peltier-Elementes verklebt. Zwischen den Metalldrähten oder -fäden 18 befinden sich Kanäle 19, in die das Phasenwechselmaterial gelangen kann. Die Kanäle 19 stehen wiederum über die Durchbrüche 20 mit dem Inneren des Speicherbehälters 1 in Verbindung, die zwischen den beiden Kühlkörpern 9, 10 ausgebildet sind.

An der außenliegenden Stirnfläche des ersten Kühlkörpers 9 ist ein rohrförmiges Befestigungselement 21 angebracht, mit dem die Vorrichtung 8 zur Auslösung der Kristallisation an der Gehäusewand des Speicherbehälters 1 befestigt ist. Das rohrförmige Befestigungselement 21 dient gleichsam als Kabelführung für das nicht dargestellte Anschlusskabel der beiden Peltier-Elemente 14, 15.

Wenn die beiden Peltier-Elemente 14, 15 mit Strom versorgt werden, kühlen sich die einander zugewandten Anlageflächen 14B, 15B der Peltier-Elemente 14, 15 ab. Dadurch wird das in den Kanälen 19 zwischen den metallischen Körpern 17 befindliche Phasenwechselmaterial auf eine Temperatur abgekühlt, die ausreichend niedrig ist, dass eine spontane Kristallisation in dem Phasenwechselmaterial, das mit den metallischen Körpern in Kontakt ist, einsetzt.

Die oben beschriebene Ausführungsform zeichnet sich durch eine sichere Auslösung der Kristallisation und eine einfache Herstellung aus. Die Herstellung ist insofern einfach, als sich die Edelstahldrähte 18 oder -fäden ohne großen Aufwand zwischen den Peltier-Elementen 14, 15 als distanzgebende Elemente anordnen lassen.

Nachfolgend werden alternative Ausführungsformen beschrieben, bei denen nicht mehrere metallische Körper sind, sondern nur ein metallischer Körper 17 zwischen den Peltier-Elementen 14, 15 angeordnet ist, um die Kanäle 19 auszubilden, in denen das Phasenwechselmaterial mit dem metallischen Werkstoff in Kontakt ist. Die einander entsprechenden Teile sind mit den gleichen Bezugszeichen versehen.

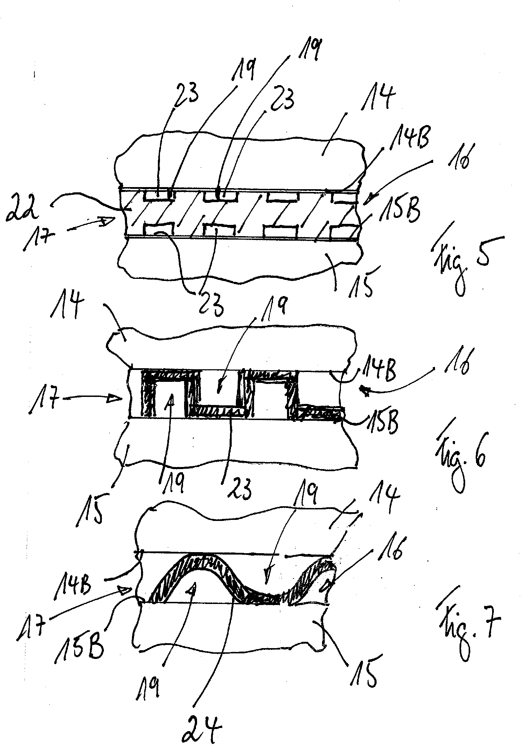

Fig. 5 zeigt ein Ausführungsbeispiel, bei dem in dem Spalt 16 zwischen dem ersten und zweiten Peltier-Element 14, 15 ein plattenförmiger Metallkörper 22 angeordnet ist, der mit Rillen oder Rinnen 23 versehen ist. Die Rillen oder Rinnen 23 können an der an der Ober und/oder Unterseite des Metallkörpers 22 vorgesehen sein, um die Kanäle 19 auszubilden, in die das Phasenwechselmaterial gelangen soll. Der plattenförmige Metallkörper 22 ist vorzugsweise eine Edelstahlplatte.

Fig. 6 zeigt ein weiteres Ausführungsbeispiel, bei dem der metallische Körper 17 ein mäanderförmiger Metallkörper 23 ist. Bei dem Ausführungseispiel von Fig. 7 ist der metallische Körper 17 ein wellenförmiger Metallkörper 24. Bei beiden Ausführungsformen werden wieder längslaufende Kanäle 19 für das Phasenwechselmaterial ausgebildet.

## Patentansprüche

1. Latentwärmespeicher mit einem Speicherbehälter (1) zur Aufnahme eines Phasenwechselmaterials und einer Vorrichtung (8) zur Auslösung einer Kristallisation in dem Phasenwechselmaterial,
wobei die Vorrichtung (8) zur Auslösung einer Kristallisation ein erstes Peltier-Element (14) und ein zweites Peltier-Element (15) aufweist, die unter Bildung eines Spaltes (16) zur Aufnahme des Phasenwechselmaterials im Abstand zueinander angeordnet sind,
**dadurch gekennzeichnet, dass**
in dem Spalt (16) zwischen dem ersten und zweiten Peltier-Element (14, 15) unter Bildung von Kanälen (19) in dem Spalt (16) mindestens ein metallischer Körper (17) angeordnet ist, der im thermischen Kontakt mit dem ersten und zweiten Peltier-Element (14, 15) ist.

2. Latentwärmespeicher nach Anspruch 1, **dadurch gekennzeichnet, dass** als metallische Körper (17) in dem Spalt mehrere im Abstand zueinander angeordnet Metalldrähte oder Metallfäden (18) angeordnet sind.

3. Latentwärmespeicher nach Anspruch 2, **dadurch gekennzeichnet, dass** die Metalldrähte oder Metallfäden (18) Edelstahldrähte oder Edelstahlfäden sind.

4. Latentwärmespeicher nach Anspruch 2 oder 3, **dadurch gekennzeichnet, dass** die Metalldrähte oder Metallfäden (18) in dem Spalt zwischen dem ersten und zweiten Peltier-Element (14, 15) parallel zueinander angeordnet sind.

5. Latentwärmespeicher nach Anspruch 1, **dadurch gekennzeichnet, dass** der metallische Körper (17) Bohrungen und/oder Rillen (23) aufweist, die die Kanäle (19) zwischen dem ersten und zweiten Peltier-Element (14, 15) ausbilden.

6. Latentwärmespeicher nach Anspruch 1, **dadurch gekennzeichnet, dass** der metallische Körper (17) derart geformt ist, dass die Kanäle (19) zwischen dem ersten und zweiten Peltier-Element (14, 15) ausgebildet werden.

7. Latentwärmespeicher nach Anspruch 6, **dadurch gekennzeichnet, dass** der metallische Körper (17) ein mäanderförmiger Metallkörper (23) oder wellenförmiger Metallkörper (24) ist.

8. Latentwärmespeicher nach einem der Ansprüche 1 bis 7, **dadurch gekennzeichnet, dass** die Breite des Spaltes (16) zwischen dem ersten und zweiten Peltier-Element (14, 15) zwischen 0,2 bis 0,6 mm, vorzugsweise zwischen 0,3 und 0,5 mm, insbesondere 0,4 mm, ist.

9. Latentwärmespeicher nach einem der Ansprüche 1 bis 8, **dadurch gekennzeichnet, dass** der mindestens eine metallische Körper (17) mit dem ersten und zweiten Peltier-Element (14, 15) verklebt ist.

10. Latentwärmespeicher nach einem der Ansprüche 1 bis 9, **dadurch gekennzeichnet, dass** die einander abgewandten Seiten des ersten und zweiten Peltier-Elements (14, 15) jeweils mit einem Kühlkörper (9, 10) im thermischen Kontakt sind.

11. Latentwärmespeicher nach einem der Ansprüche 1 bis 10, **dadurch gekennzeichnet, dass** der Kühlkörper (9) des ersten Peltier-Elements (14) und der Kühlkörper (10) des zweiten Peltier-Elements (15) als eine erste und eine zweite Gehäusehälfte ausgebildet sind, die miteinander verschraubt sind, wobei in dem ersten und/oder zweiten Kühlkörper (9, 10) mindestens ein zu dem Spalt (16) zwischen den Peltier-Elementen (14, 15) führender Durchbruch (20) vorgesehen ist.

12. Latentwärmespeicher nach einem der Ansprüche 1 bis 11, **dadurch gekennzeichnet, dass** das Gehäuse (11) ein Befestigungselement (21) aufweist, mit dem die Vorrichtung (8) zur Einleitung der Kristallisation an dem Speicherbehälter (1) befestigt ist.

13. Latentwärmespeicher nach Anspruch 12, **dadurch gekennzeichnet, dass** das Befestigungselement (21) als eine Leitungsführung ausgebildet ist, in der die Anschlussleitungen für das erste und zweite Peltier-Element (14, 15) geführt sind.

14. Latentwärmespeicher nach einem der Ansprüche 1 bis 13, **dadurch gekennzeichnet, dass** die Vorrichtung (8) zur Auslösung der Kristallisation in der in der Gebrauchslage unteren Hälfte des Speicherbehälters (1) angeordnet ist.

## Claims

1. Latent heat accumulator comprising a storage container (1) for receiving a phase-change material and a device (8) for initiating crystallisation in the phase-change material, the device (8) for initiating crystallisation comprising a first Peltier element (14) and a second Peltier element (15), which are arranged so as to be spaced apart from one another, thus forming a gap (16) for receiving the phase-change material, **characterised in that** at least one metal body (17) is arranged in the gap (16) between the first and second Peltier element (14, 15) so as to form channels (19) in the gap (16), which metal body is in thermal contact with the first and second Peltier element (14, 15).

2. Latent heat accumulator according to claim 1, **characterised in that** a plurality of spaced apart metal wires or metal filaments (18) are arranged in the gap as the metal bodies (17).

3. Latent heat accumulator according to claim 2, **characterised in that** the metal wires or metal filaments (18) are high-grade steel wires or high-grade steel filaments.

4. Latent heat accumulator according to either claim 2 or claim 3, **characterised in that** the metal wires or metal filaments (18) are arranged in the gap in parallel with one another between the first and second Peltier element (14, 15).

5. Latent heat accumulator according to claim 1, **characterised in that** the metal body (17) comprises holes and/or grooves (23) which form the channels (19) between the first and second Peltier element (14, 15).

6. Latent heat accumulator according to claim 1, **characterised in that** the metal body (17) is formed such that the channels (19) are formed between the first and second Peltier element (14, 15).

7. Latent heat accumulator according to claim 6, **characterised in that** the metal body is a meandering metal body (23) or an undulating metal body (24).

8. Latent heat accumulator according to any of claims 1 to 7, **characterised in that** the width of the gap (16) between the first and second Peltier element (14, 15) is between 0.2 and 0.6 mm, preferably between 0.3 and 0.5 mm, in particular is 0.4 mm.

9. Latent heat accumulator according to any of claims 1 to 8, **characterised in that** the at least one metal body (17) is bonded to the first and second Peltier element (14, 15).

10. Latent heat accumulator according to any of claims 1 to 9, **characterised in that** each of the faces of the first and second Peltier element (14,15) that face away from one another are in thermal contact with a cooling body (9, 10).

11. Latent heat accumulator according to any of claims 1 to 10, **characterised in that** the cooling body (9) of the first Peltier element (14) and the cooling body (10) of the second Peltier element (15) are in the form of a first and a second housing half, which are screwed together, at least one opening (20) leading to the gap (16) between the Peltier elements (14, 15) being provided in the first and/or second cooling body (9, 10).

12. Latent heat accumulator according to any of claims 1 to 11, **characterised in that** the housing (11) comprises a fastening element (21), by means of which the device (8) for starting the crystallisation is fastened to the storage container (1).

13. Latent heat accumulator according to claim 12, **characterised in that** the fastening element (21) is in the form of a line conduit, in which the connection lines for the first and second Peltier element (14, 15) are guided.

14. Latent heat accumulator according to any of claims 1 to 13, **characterised in that** the device (8) for initiating the crystallisation is arranged in the half of the storage container (1) that is at the bottom when in the use position.

## Revendications

1. Accumulateur de chaleur latente avec un réservoir de stockage (1) pour la réception d'un matériau à changement de phase et un dispositif (8) pour déclencher une cristallisation dans le matériau à changement de phase,
dans lequel le dispositif (8) pour déclencher une cristallisation présente un premier élément Peltier (14) et un deuxième élément Peltier (15), qui sont agencés à distance l'un de l'autre en formant une fente (16) pour la réception du matériau à changement de phase,
**caractérisé en ce que**
au moins un corps métallique (17), qui est en contact thermique avec le premier et deuxième élément Peltier (14, 15), est agencé dans la fente (16) entre le premier et deuxième élément Peltier (14, 15) en formant des canaux (19) dans la fente (16).

2. Accumulateur de chaleur latente selon la revendication 1, **caractérisé en ce que** plusieurs câbles métalliques ou fils métalliques (18) agencés à distance l'un de l'autre sont agencés en tant que corps métalliques (17) dans la fente.

3. Accumulateur de chaleur latente selon la revendication 2, **caractérisé en ce que** les câbles métalliques ou fils métalliques (18) sont des câbles en acier inoxydable ou des fils en acier inoxydable.

4. Accumulateur de chaleur latente selon la revendication 2 ou 3, **caractérisé en ce que** les câbles métalliques ou fils métalliques (18) sont agencés parallèlement l'un à l'autre dans la fente entre le premier et deuxième élément Peltier (14, 15).

5. Accumulateur de chaleur latente selon la revendication 1, **caractérisé en ce que** le corps métallique (17) présente des alésages et/ou cannelures (23), qui forment les canaux (19) entre le premier et deuxième élément Peltier (14, 15).

6. Accumulateur de chaleur latente selon la revendication 1, **caractérisé en ce que** le corps métallique (17) est formé de telle sorte que les canaux (19) sont réalisés entre le premier et deuxième élément Peltier (14, 15).

7. Accumulateur de chaleur latente selon la revendication 6, **caractérisé en ce que** le corps métallique (17) est un corps métallique en forme de méandre (23) ou un corps métallique ondulé (24).

8. Accumulateur de chaleur latente selon l'une quelconque des revendications 1 à 7, **caractérisé en ce que** la largeur de la fente (16) entre le premier et deuxième élément Peltier (14, 15) est entre 0,2 à 0,6 mm, de préférence entre 0,3 et 0,5 mm, en particulier de 0,4 mm.

9. Accumulateur de chaleur latente selon l'une quelconque des revendications 1 à 8, **caractérisé en ce que** l'au moins un corps métallique (17) est collé au premier et deuxième élément Peltier (14, 15).

10. Accumulateur de chaleur latente selon l'une quelconque des revendications 1 à 9, **caractérisé en ce que** les côtés opposés l'un à l'autre du premier et deuxième élément Peltier (14, 15) sont respectivement en contact thermique avec un radiateur (9, 10).

11. Accumulateur de chaleur latente selon l'une quelconque des revendications 1 à 10, **caractérisé en ce que** le radiateur (9) du premier élément Peltier (14) et le radiateur (10) du deuxième élément Peltier (15) sont réalisés en tant que première et deuxième moitié de boîtier, qui sont vissées l'une à l'autre, dans lequel au moins une traversée (20) conduisant à la fente (16) entre les éléments Peltier (14, 15) est prévue dans le premier et/ou deuxième radiateur (9, 10).

12. Accumulateur de chaleur latente selon l'une quelconque des revendications 1 à 11, **caractérisé en ce que** le boîtier (11) présente un élément de fixation (21), avec lequel le dispositif (8) de lancement de la cristallisation est fixé sur le réservoir de stockage (1).

13. Accumulateur de chaleur latente selon la revendication 12, **caractérisé en ce que** l'élément de fixation (21) est réalisé en tant que guide de conduite, dans lequel les lignes de raccordement pour le premier et deuxième élément Peltier (14, 15) sont guidées.

14. Accumulateur de chaleur latente selon l'une quelconque des revendications 1 à 13, **caractérisé en ce que** le dispositif (8) pour déclencher la cristallisation est agencé dans la moitié inférieure dans la position d'utilisation du réservoir de stockage (1).
